# EUROPEAN PATENT SPECIFICATION

(11) **EP 2 558 716 B1**
(45) Date of publication and mention of the grant of the patent: **09.12.2015**
(21) Application number: 11799885.6
(22) Date of filing: 09.12.2011
(51) Int. Cl.: F03D 1/06

(54) **T-BOLT ATTACHMENT OF A BLADE ROOT OF A WIND TURBINE**
QUERBOLTZENANSCHLUSS EINER BLATTWURZEL EINER WINDKRAFTANLAGE
CALAGE DU PALE D'UNE EOLIENNE AYANT BOULON POUR RAINURE EN T

(30) Priority: 09.06.2011 DE 202011101634 U
(43) Date of publication of application: 20.02.2013
(73) Proprietor: Mitsubishi Heavy Industries, Ltd., Tokyo 108-8215 (JP); Euros Entwicklungsgesellschaft für Windkraftanlagen mbH, 13088 Berlin (DE)
(72) Inventor: SEUFERT, Bernd, 13088 Berlin (DE); CREMER, Andreas, London W1K 6WL (GB)
(74) Representative: RGTH
(86) International application number: PCT/JP2011/006903
(87) International publication number: WO 2012/168990

(56) References cited:
- EP-A1- 2 078 851
- DE-C1- 19 733 372
- US-A- 5 171 099
- US-A1- 2003 205 011

## Description

### [Technical Field]

The present invention relates to a wind turbine comprising a blade and a hub, wherein the blade comprises multiple cross holes and multiple longitudinal holes for receiving cross bolts and longitudinal bolts respectively in its wall, wherein a plurality of longitudinal bolts is arranged in a plurality of ring-shaped rows each extending along the circumference of the blade and wherein a plurality of longitudinal bolts is disposed within the blade wall in thickness direction, said thickness direction being a transverse direction of a section of the blade wall.

### [Background Art]

Normally, wind turbines comprise a hub structure to which the blades are connected in a connection area at their root end. Many wind turbines comprise pitch bearings with an inner and an outer bearing ring to rotate the mounted blades around their longitudinal axis respectively. In this case, each rotor blade is connected to the inner or outer bearing ring of the corresponding pitch bearing, while the hub is connected to the other bearing ring.

Connecting the rotor blades of a wind turbine to a mounting structure of the wind turbine, such as the hub or a bearing ring of a pitch bearing, is a very crucial and difficult task as wind turbine blades are amongst the most stressed components of the entire wind turbine. The forces acting on the blades due to their movement have to be transmitted to the hub of the wind turbine. Consequently, the connection and the neighboring parts of the wind turbine blades will be subjected to heavy strains and loads and be prone to a reduction of fatigue strength or material failure. As the trend is towards an increased size of wind turbines, also the size of wind turbine blades increases and the constructional design of the connection of wind turbine blades becomes more and more relevant.

For connecting the rotor blade to a mounting structure of the wind turbine such as a hub, blade bearing ring, adapters or extensions as well as for the connection of rotor blade segments with each other, a combination of longitudinal and cross bolts inserted in holes within the wall of the rotor blade is often used. This solution has established itself in practical use due to its simplicity and reliability in term of transmitting high loads.

The most simplistic version is explained in "Wind power plants" (Erich Hau 1996, 2. Ed., Springer Verlag, Heidelberg New York, pp. 206-209). In this approach multiple so called cross holes are applied vertically to the component wall of the blade and within the walls so called longitudinal holes leading to the cross holes are provided. Cross bolts are inserted into the cross-holes. Into these cross bolts the longitudinal bolts are inserted upon which the rotor blade can be braced with the help of a flange of a hub. The longitudinal bolts can be pre-stressed, either directly by stressing them with a bolt head or indirectly by using a nut on a longitudinal bolt that is applied as a stud bolt.

Adjusted approaches were published in multiple patents or patent applications in order to achieve a better ratio of transmittable load to component size and weight, based on the idea of applying more longitudinal bolts on a certain wall length of the blade:

DE 197 33 372 C1 arranges the cross bolts within two rows of blind holes to connect the blade to a T-shaped flange of a hub by the use of longitudinal bolts. These blind holes for the cross bolts have to be bored from both the in- and the outside which results in a high production effort. Furthermore, rigidity reducing notch stress can be expected at the end of the blind hole. Another disadvantage of this arrangement is the significant distance between the longitudinal bolts. Due to this, the longitudinal bolts will have to be of a considerable size in order to ensure an adequate connection.

US 5,171,099 A discloses an apparatus for attaching a sandwich panel to another structure wherein a hollow pin passes through the panel near the edge to be joined to the structure.

In US 2003/0205011 A1 a device for joining a panel and another structure is disclosed wherein the device includes a plurality of mounts evenly distributed along the interface between the panel and the structure.

DE 103 24 166 B4 describes the allocation of two longitudinal bolts per cross bolt outside the blade walls. The above mentioned disadvantage of large distance between longitudinal bolts is especially applying here. The long length of the cross bolts requires very high diameters which are not easy to produce in the required high quality material. The distance to the neighboring bolt groups has to be increased due to the increased diameter of the cross bolts themselves. Thus, only a limited amount of bolt groups can be applied to the default length.

Connecting the blade to the inner or outer bearing ring of a pitch bearing is an even more challenging task then connecting it to a hub. The hub is usually made of cast steel and its geometry helps in letting it bear extreme loads transmitted from the blades. In contrast, a bearing ring has a geometric ring shape which is much more prone to damages due to the heavy load which are transmitted through it from the blades to the hub.

### [Summary of Invention]

It is the object of the present invention to design a blade connection which avoids the above problems and provides an improved strength and load transmission of the connection between blade and bearing ring. At the same time, the connection should be easy to produce and apply. A further object of the invention is to improve the load transmittance of the connection in such a way that correlated problems such as deformations of the bearing rings of the wind turbine are prevented.

These objects are achieved by applying at least one longitudinal bolt in thickness direction of the blade wall when connecting it to the inner or outer bearing ring of a pitch bearing. For the connection the blade comprises multiple holes in its wall for the insertion of bolts. There are holes in the longitudinal direction of the blade for receiving longitudinal bolts and holes in the thickness direction of the blade for the insertion of cross bolts. The term "thickness direction" corresponds to a transverse direction or cross direction of a section of the blade wall wherein the opposite blade wall section is not included. In particular, the thickness direction is substantially perpendicular to a center line of the blade wall section. In the case of a blade with a constant wall thickness, the thickness direction is substantially perpendicular to the wall of the blade. In addition, multiple cross holes and longitudinal holes are provided within the blade wall in a connection area where the blade is connected to the inner bearing ring or the outer bearing ring of a pitch bearing, wherein the pitch bearing itself comprises a plurality of holes which are respectively communicated with the longitudinal holes of the blade for the insertion of the longitudinal bolts. Furthermore, a plurality of longitudinal bolts is arranged in a plurality of ring-shaped rows each extending along the circumference of the blade and a plurality of longitudinal bolts is disposed within the blade wall in thickness direction, wherein the plurality of longitudinal bolts being disposed in thickness direction is mounted in one cross bolt. Additionally, the cross bolts are disposed in the cross holes, wherein the cross bolts each comprise at least one hole for receiving at least part of a longitudinal bolt, and wherein the at least one hole is a blind hole or a through hole.

The blade is connected to the inner or outer bearing ring by means of the cross bolts and the longitudinal bolts inserted in the cross holes and longitudinal holes in the wall of the blade respectively. By the above described arrangement, a strong connection between the blade and the inner or the outer bearing ring is established. Applying more than one longitudinal bolt in thickness direction increases the length of connection between blade and inner or outer bearing ring in cross direction of the blade on which forces are transmitted. Instead of a point to point connection, several points of connection are established which increase the strength and life time of the connection. In the long run, this results in less correlated problems with the high load transmittance between blade and hub, such as deformations of the bearing rings.

In other words, the connecting elements of the connection are arranged in an especially compact way, allowing significantly more connecting elements while keeping almost identical outer dimensions for the component so that significantly more static and dynamic loads are transferred. It is also possible to reduce the component dimensions considerably while maintaining equal loads to achieve manufacturing and logistical advantages. Preferably, the longitudinal bolts are located especially close to neighboring equipment or within blade sections and all have the same construction. Arranging multiple rows of longitudinal bolts in thickness direction within the component walls results in a very tight placement of connecting elements.

According to the invention, the cross bolts are disposed within the cross holes and comprise at least one hole for receiving at least part of the longitudinal bolts, preferably the tip area of the longitudinal bolts. These holes within the cross bolts are either blind holes or through holes. The cross holes for the cross bolts are preferably arranged in thickness direction of the blade so that one cross bolt can receive multiple longitudinal bolts in thickness direction. In a preferred embodiment, the cross bolts inserted in the cross holes have a small flattening at their backs. The flattened backs of the cross bolts result in an easier production.

In a further embodiment of the invention, the at least one longitudinal bolt is made of fiber reinforced material, preferably carbon fiber reinforced plastic. Even though the stiffness of fiber reinforced material is lower than the one of steel, the material possesses high strength, less weight and lengthwise flexibility. These characteristics of material result in different advantages when using bolts out of fiber reinforced material instead of conventional bolts out of steel.

Due to the higher flexibility in the longitudinal direction less pretension force is lost. The high strength of the material results in a stronger connection and in a long fatigue life of the bolts out of fiber reinforced material and therefore the connection. Additionally, due to the higher strength smaller diameters of the bolts are possible while keeping the same strength of the connection when compared to bigger but at the same time weaker conventional bolts. Another advantage over conventional bolts is the lower weight of bolts out of fiber reinforced material and the avoidance of corrosion problems.

Preferably, the at least one longitudinal bolt out of fiber reinforced material comprises a thread. The holes in the blade wall can comprise threaded inside walls or threaded inserts in which the tread of the longitudinal bolt can take hold when being inserted into one of the holes. In a preferred embodiment, the longitudinal bolt out of fiber reinforced material only comprises a thread on the part of the bolt which comes to rest inside the inner or outer bearing ring when being completely inserted into the hole. On the part of the bolt which comes to rest inside the blade or the cross bolt there is no thread. In the blade or the cross bolt the longitudinal bolt out of fiber reinforced material can be bonded into its surrounding structure to provide the connection with additional strength. This is especially effective as the blade itself usually comprises fiber reinforced material so that a high bonding strength is assured.

In a further preferred embodiment, the stiffness of the connection between blade and the inner bearing ring is adapted to the stiffness of the connection between the outer bearing ring and the hub by tightening the multiple longitudinal bolts which are inserted in thickness direction of the blade. The term "stiffness" of a component in general describes the resistance of the component against distortions or deformations which are caused by forces or torques acting on the component. This stiffness depends on the geometry and material characteristics of the component such as the elasticity. The stiffness of a connection of two components depends on the stiffness of the two components, i.e. the materials and geometries, and on the type and strength of the connection itself. In an alternative embodiment, the blade is connected to the outer bearing ring wherein the stiffness of said connection between the blade and the outer bearing ring corresponds to the stiffness of the connection between the inner bearing ring and the hub.

Concerning the pitch bearing of a wind turbine, two connections have to be considered; the connection of the blade to one of the bearing rings and the connection of the hub to the other bearing ring. It is clearly disadvantageous for the load transmittance if the stiffness of the two connections differs substantially. A difference in stiffness results in high stresses and strains of the bearing and a reduced fatigue strength and abrasion of the material. A consequence is usually a deformation of the bearing rings, in particular the bearing ring which is connected to the blade, due to the high loads transmitted by the connection. By adjusting the stiffness of the connection between the bearing ring and the blade in such a way that it corresponds to the stiffness of the connection between the other bearing ring and the hub the above mentioned deformations of the bearing rings are prevented.

Preferably, the blade wall comprises two ring-shaped rows of longitudinal holes for receiving longitudinal bolts. The rows are considered to be ring-shaped because they extend along the entire circumference of the blade. The ring-shaped rows have preferably a constant distance to each other along the entire circumference of the blade.

Preferably, longitudinal bolts of different rows are arranged in the blade wall along a line which is perpendicular to a center line of the blade wall. As an alternative not forming a part of this invention longitudinal bolts of different ring-shaped rows are arranged in a staggered way in the thickness direction of the blade.

In a further embodiment of the invention, the distance between the longitudinal bolts which are disposed within the blade wall in thickness direction amounts between 20 % and 90 %, preferably between 30 % and 80 %, especially preferably between 40 % and 70%, of the blade wall thickness at its root end. The term distance refers to the distance between the centers of two neighboring bolts in thickness direction. The relatively small distance between the longitudinal bolts allows the arrangement of more longitudinal bolts and therefore an enhanced load transfer while keeping identical outer diameters of the components to be connected.

### [Brief Description of Drawings]

The invention will be described below with reference to the following figures which show in schematic representation
- [Fig. 1]: Figure 1 is an example of an alternative solution not forming a part of this invention. Figure 1 is a cross sectional view of a blade wall and an inner bearing ring of a pitch bearing;
- [Fig. 2]: Figure 2 is a cross sectional view of a blade wall and an inner bearing ring of a pitch bearing; and
- [Fig. 3]: Figure 3 is a side view of a blade wall and an inner bearing ring of a pitch bearing.

### [Description of Embodiments]

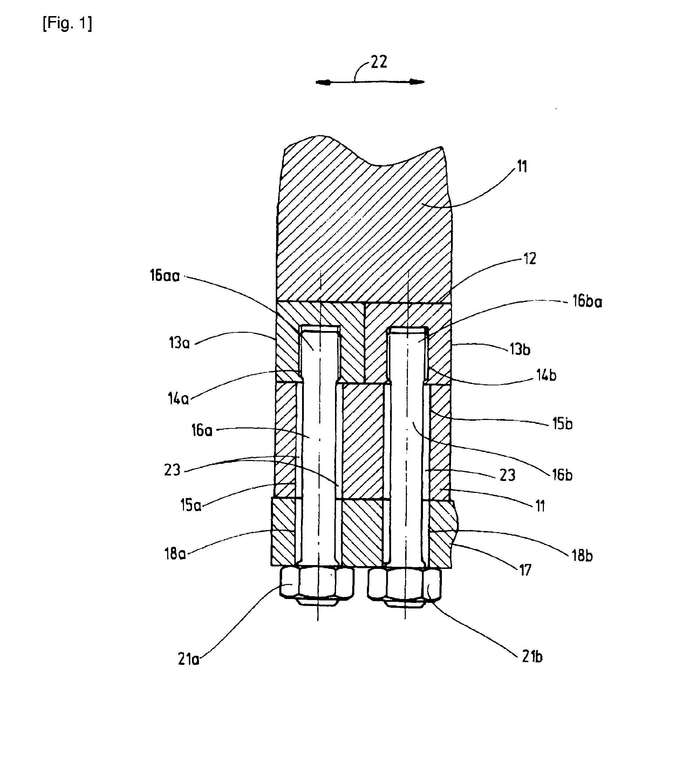

In an alternative solution not forming a part of this invention. Figure 1 shows a cross sectional view of a blade wall 11 and an inner bearing ring 17 of a pitch bearing in thickness direction 22 of a wind turbine. The blade wall 11 comprises a cross hole 12 for the insertion of cross bolts in which in this particular embodiment of the invention two cross bolts 13a, 13b are disposed. The inner face sides of the cross bolts 13a, 13b abut on each other. Furthermore, the blade wall 11 comprises longitudinal holes for the insertion of longitudinal bolts which are arranged in two ring-shaped rows each extending along the circumference of the blade. The two rows are arranged in thickness direction 22 of the blade wall 11 one behind the other and within each row the longitudinal bolts are arranged in uniform intervals. In figure 1, two longitudinal holes 15a, 15b, namely one longitudinal hole of each ring-shaped row, are displayed in which one longitudinal bolt 16a, 16b is disposed respectively. The holes 15a, 15b and the longitudinal bolts 16a, 16b are adapted such that they form a clearance fit so that once the longitudinal bolts 16a, 16b are disposed in the longitudinal holes 15a, 15b a clearance 23 between the inner wall of the longitudinal holes 15a, 15b and the longitudinal bolts 16a, 16b exists. The longitudinal bolts 16a, 16b of the two different ring-shaped rows are arranged within the blade wall 11 perpendicular to the center line of the blade wall 11 and therefore arranged in thickness direction 22 of the blade wall 11. Each longitudinal bolt 16a, 16b is mounted in a separate cross bolt 13a, 13b respectively. For receiving part of a longitudinal bolt 16a, 16b the cross bolts 13a, 13b comprise one hole 14a, 14b respectively. In this embodiment, the holes 14a, 14b within the cross bolts 13a, 13b for the insertion of part of the longitudinal bolts 16a, 16b are blind holes. Only the end areas 16aa, 16ba of each longitudinal bolt 16a, 16b is inserted in the cross bolts 13a, 13b. These end areas 16aa, 16ba comprise threads and are screwed into mating threads disposed in the holes 14a, 14b.

By means of the arrangement of the cross bolts 13a, 13b and the longitudinal bolts 16a, 16b within the blade wall 11, the blade is connected to the inner bearing ring 17 of a pitch bearing. Therefore, the inner bearing ring 17 comprises two longitudinal holes 18a, 18b for the insertion of the longitudinal bolts 16a, 16b. In particular, the inner bearing ring 17 is braced to the blade wall 11 by means of the longitudinal bolts 16a, 16b and the nuts 21a, 21b.

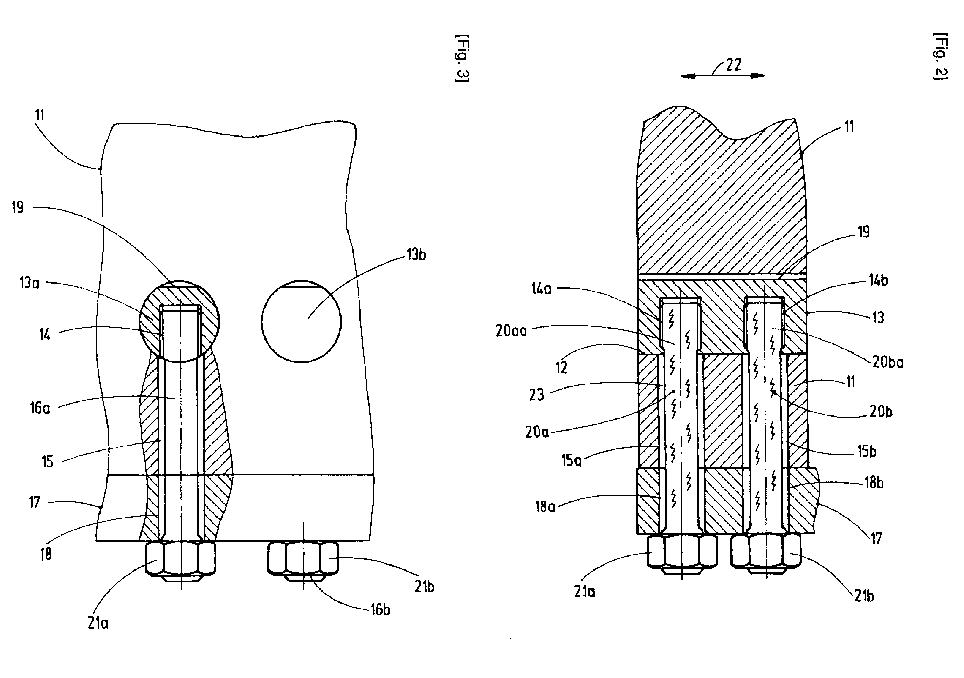

Figure 2 shows a cross sectional view of a blade wall 11 and an inner bearing ring 17 of a pitch bearing in thickness direction 22 of an embodiment of the present invention. Within the blade wall 11 one cross bolt 13 is disposed in one cross hole 12 and two longitudinal bolts 20a, 20b made of fiber reinforced material are disposed in two longitudinal holes 15a, 15b. The two longitudinal bolts 20a, 20b made out of fiber reinforced material are both mounted in one cross bolt 13. For this purpose, the cross bolt 13 comprises two blind holes 14a, 14b into which the end areas 20aa, 20ba of the longitudinal bolts 20a, 20b are bonded. Additionally, the cross bolt 13 comprises a flattening 19 on its back side which results in an easier assembly of it. The assembly of the longitudinal bolts 20a, 20b and the cross bolt 13 connect the inner bearing ring 17 of a pitch bearing to the blade wall 11. For this connection, the inner bearing ring 17 comprises two holes 18a, 18b in longitudinal direction for the insertion of the longitudinal bolts 20a, 20b and is braced to the blade wall by means of the longitudinal bolts 20a, 20b and the nuts 21a, 21b.

Figure 3 shows a side view on a blade wall 11 and the inner bearing ring 17 of a pitch bearing wherein the blade wall 11 is partly not depicted so that a longitudinal bolt 16a which is disposed within a longitudinal hole 15 within the blade wall 11 is shown. The longitudinal bolt 16a is mounted in a cross bolt 13a which extends into the image plane and is inserted in a longitudinal hole 18 of the inner bearing ring 17. Additionally, the longitudinal bolt 16a is braced via a nut 21a. Next to the longitudinal bolt 16a, another cross bolt 13b with another longitudinal bolt 16b is indicated wherein the other longitudinal bolt is also braced by means of a nut 21b.

## Claims

1. A wind turbine, comprising:
a blade, and
a hub,
wherein the blade comprises multiple cross holes (12) and multiple longitudinal holes (15a, 15b) for receiving cross bolts (13) and longitudinal bolts (16a, 16b, 20a, 20b) respectively in its wall,
wherein a plurality of longitudinal bolts (16a, 16b, 20a, 20b) is arranged in a plurality of ring-shaped rows each extending along the circumference of the blade, and wherein a plurality of longitudinal bolts (16a, 16b, 20a, 20b) is disposed within the blade wall (11) in thickness direction (22), said thickness direction (22) being a transverse direction of a section of the blade wall (11)
**characterized in that**
the wind turbine comprises a pitch bearing for mounting the blade to the hub, said pitch bearing comprising an inner bearing ring (17) and an outer bearing ring, wherein the blade is connected to the inner bearing ring (17) or the outer bearing ring,
the multiple cross holes (12) and multiple longitudinal holes (15a, 15b) are disposed in a connection area where the blade is connected to the inner bearing ring (17) or the outer bearing ring,
the pitch bearing comprises a plurality of holes (18a, 18b) which are respectively communicated with the longitudinal holes (15a, 15b) of the blade for the insertion of the longitudinal bolts (16a, 16b, 20a, 20b), and
the plurality of longitudinal bolts (16a, 16b, 20a, 20b), being disposed within the blade wall (11) in thickness direction (22) is mounted in one cross bolt (13), wherein cross bolts (13) are disposed in the cross holes (12),
wherein the cross bolts (13, 13a, 13b) each comprise at least one hole (14a, 14b) for receiving at least part (16aa, 16ba, 20aa, 20ba) of a longitudinal bolt (16a, 16b, 20a, 20b), and
wherein the at least one hole (14a, 14b) of the cross bolt is a blind hole or a through hole.

2. The wind turbine according to claim 1,
wherein the cross bolts (13) have a small flattening (19) at their backs.

3. The wind turbine according to claim 1,
wherein the longitudinal bolts (20a, 20b) are made from fiber reinforced material.

4. The wind turbine according to claim 3,
wherein the longitudinal bolts (16a, 16b, 20a, 20b) are bonded into the blade.

5. The wind turbine according to claim 1,
wherein the stiffness of the connection between the inner bearing ring (17) and the blade by tightening the plurality of longitudinal bolts (16a, 16b, 20a, 20b) corresponds to the stiffness of a connection between the outer bearing ring and the hub.

6. The wind turbine according to claim 1,
wherein the stiffness of the connection between the outer bearing ring and the blade by tightening the plurality of longitudinal bolts (16a, 16b, 20a, 20b) corresponds to the stiffness of a connection between the inner bearing ring (17) and the hub.

7. The wind turbine according to claim 1,
wherein the plurality of ring-shaped rows have a constant distance to each other along the circumference of the blade.

8. The wind turbine according to claim 7,
wherein longitudinal bolts (16a, 16b, 20a, 20b) of different ring-shaped rows are arranged within the blade wall (11) on a line which is perpendicular to a center line of the blade wall (11).

9. The wind turbine according to claim 7,
wherein longitudinal bolts (16a, 16b, 20a, 20b) of different ring-shaped rows are disposed staggered in the thickness direction (22) of the blade wall (11).

10. The wind turbine according to claim 1,
wherein the distance between the longitudinal bolts (16a, 16b, 20a, 20b) disposed within the blade wall (11) in thickness direction (22) amounts between 20 % to 90 % of the thickness of the blade wall (11) at its root end.

## Patentansprüche

1. Windturbine, umfassend:
ein Blatt, und
eine Nabe,
wobei das Blatt mehrere Querbohrungen (12) und mehrere Längsbohrungen (15a, 15b) zur Aufnahme von Querbolzen (13) und Längsbolzen (16a, 16b, 20a, 20b) in seiner Wand umfasst,
wobei eine Vielzahl von Längsbolzen (16a, 16b, 20a, 20b) in einer Vielzahl von ringförmigen Reihen angeordnet ist, die sich jeweils entlang des Umfangs des Blattes erstrecken, und wobei eine Vielzahl von Längsbolzen (16a, 16b, 20a, 20b) innerhalb der Blattwand (11) in Dickenrichtung angeordnet (22) ist, wobei die Dickenrichtung (22) eine Querrichtung eines Abschnitts der Blattwand (11) ist,
**dadurch gekennzeichnet dass**
die Windturbine ein Pitch-Lager zum Befestigen das Blattes an der Nabe umfasst, wobei das Pitch-Lager einen inneren Lagerring (17) und einen äußeren Lagerring umfasst, wobei das Blatt mit dem inneren Lagerring (17) oder dem äußeren Lagerring verbunden ist,
die mehreren Querbohrungen (12) und mehreren Längsbohrungen (15a, 15b) in einem Verbindungsbereich angeordnet sind, in dem das Blatt mit dem inneren Lagerring (17) oder dem äußeren Lagerring verbunden ist,
das Pitch-Lager eine Vielzahl von Bohrungen (18a, 18b) aufweist, die jeweils mit den Längsbohrungen (15a, 15b) des Blattes für die Einfügung der Längsbolzen (16a, 16b, 20a, 20b) in Verbindung stehen, und
die Vielzahl von Längsbolzen (16a, 16b, 20a, 20b), angeordnet innerhalb der Blattwand in Dickenrichtung (22), in einem Querbolzen (13) befestigt ist, wobei Querbolzen (13) in den Querbohrungen (12) angeordnet sind, wobei jeder der Querbolzen (13, 13a, 13b) mindestens eine Bohrung (14a, 14b) zur Aufnahme zumindest eines Teils (16aa, 16ba, 20aa, 20ba) eines Längsbolzens (16a, 16b, 20a, 20b) umfasst, und
wobei die wenigstens eine Bohrung (14a, 14b) des Querbolzens eine Sackbohrung oder eine Durchgangsbohrung ist.

2. Windturbine gemäß Anspruch 1,
wobei die Querbolzen (13) an ihren Rückseiten eine kleine Abflachung (19) aufweisen.

3. Windturbine gemäß Anspruch 1,
wobei die Längsbolzen (20a, 20b) aus faserverstärktem Material hergestellt sind.

4. Windturbine gemäß Anspruch 3,
wobei die Längsbolzen (16a, 16b, 20a, 20b) in das Blatt gebondet sind.

5. Windturbine gemäß Anspruch 1,
wobei die Steifigkeit der Verbindung zwischen dem inneren Lagerring (17) und dem Blatt durch Anziehen der Vielzahl von Längsbolzen (16a, 16b, 20a, 20b) der Steifigkeit einer Verbindung zwischen dem äußeren Lagerring und der Nabe entspricht.

6. Windturbine gemäß Anspruch 1,
wobei die Steifigkeit der Verbindung zwischen dem äußeren Lagerring und dem Blatt durch Anziehen der Vielzahl von Längsbolzen (16a, 16b, 20a, 20b) der Steifigkeit einer Verbindung zwischen dem inneren Lagerring (17) und der Nabe entspricht.

7. Windturbine gemäß Anspruch 1,
wobei die Mehrzahl der ringförmigen Reihen einen konstanten Abstand zueinander entlang des Umfangs des Blattes aufweist.

8. Windturbine gemäß Anspruch 7,
wobei Längsbolzen (16a, 16b, 20a, 20b) unterschiedlicher ringförmiger Reihen innerhalb der Blattwand (11) auf einer Linie angeordnet sind, die senkrecht zu einer Mittellinie der Blattwand (11) steht.

9. Windturbine gemäß Anspruch 7,
wobei Längsbolzen (16a, 16b, 20a, 20b) unterschiedlicher ringförmigen Reihen versetzt in Dickenrichtung (22) der Blattwand (11) angeordnet sind.

10. Windturbine gemäß Anspruch 1,
wobei der Abstand zwischen den, innerhalb der Blattwand (11) in Dickenrichtung (22) angeordneten, Längsbolzen (16a, 16b, 20a, 20b) zwischen 20% bis 90% der Dicke der Blattwand (11) an ihrem Fußende beträgt.

## Revendications

1. Eolienne, comprenant:
une pale, et
un moyeu,
dans laquelle la pale comporte de multiples trous transversaux (12) et de multiples trous longitudinaux (15a, 15b) destinés à recevoir des boulons transversaux (13) et des boulons longitudinaux (16a, 16b, 20a, 20b), respectivement, dans sa paroi,
dans laquelle une pluralité de boulons longitudinaux (16a, 16b, 20a, 20b) sont disposés en une pluralité de rangées de forme annulaire qui s'étendent chacune le long de la circonférence de la pale, et dans laquelle une pluralité de boulons longitudinaux (16a, 16b, 20a, 20b) sont disposés à l'intérieur de la paroi de pale (11) dans le sens de l'épaisseur (22), ledit sens de l'épaisseur (22) étant une direction transversale d'une section de la paroi de pale (11),
**caractérisée en ce que**: l'éolienne comprend une articulation de pas pour monter la pale sur le moyeu, ladite articulation de pas comprenant une bague de roulement intérieure (17) et une bague de roulement extérieure, dans laquelle la pale est connectée à la bague de roulement intérieure (17) ou à la bague de roulement extérieure,
les multiples trous transversaux (12) et les multiples trous longitudinaux (15a, 15b) sont disposés dans une région de connexion où la pale est connectée à la bague de roulement intérieure (17) ou à la bague de roulement extérieure,
l'articulation de pas comporte une pluralité de trous (18a, 18b) qui communiquent respectivement avec les trous longitudinaux (15a, 15b) de la pale pour l'insertion des boulons longitudinaux (16a, 16b, 20a, 20b), et
la pluralité de boulons longitudinaux (16a, 16b, 20a, 20b), qui sont disposés à l'intérieur de la paroi de pale (11) dans le sens de l'épaisseur (22), sont montés dans un boulon transversal (13),
dans laquelle les boulons transversaux (13) sont disposés dans les trous transversaux (12),
dans laquelle les boulons transversaux (13, 13a, 13b) comportent chacun au moins un trou (14a, 14b) destiné à recevoir au moins une partie (16aa, 16ba, 20aa, 20ba) d'un boulon longitudinal (16a, 16b, 20a, 20b), et
dans laquelle ledit au moins un trou (14a, 14b) du boulon transversal est un trou borgne ou un trou traversant.

2. Eolienne selon la revendication 1, dans laquelle le dos des boulons transversaux (13) présente un léger aplatissement(19).

3. Eolienne selon la revendication 1, dans laquelle les boulons longitudinaux (20a, 20b) sont constitués d'un matériau renforcé par des fibres.

4. Eolienne selon la revendication 3, dans laquelle les boulons longitudinaux (16a, 16b, 20a, 20b) sont liés dans la pale.

5. Eolienne selon la revendication 1, dans laquelle la rigidité de la connexion entre la bague de roulement intérieure (17) et la pale en serrant la pluralité de boulons longitudinaux (16a, 16b, 20a, 20b) correspond à la rigidité d'une connexion entre la bague de roulement extérieure et le moyeu.

6. Eolienne selon la revendication 1, dans laquelle la rigidité de la connexion entre la bague de roulement extérieure et la pale en serrant la pluralité de boulons longitudinaux (16a, 16b, 20a, 20b) correspond à la rigidité d'une connexion entre la bague de roulement intérieure (17) et le moyeu.

7. Eolienne selon la revendication 1, dans laquelle la pluralité de rangées de forme annulaire présentent une distance constante les unes par rapport aux autres le long de la circonférence de la pale.

8. Eolienne selon la revendication 7, dans laquelle les boulons longitudinaux (16a, 16b, 20a, 20b) de différentes rangées de forme annulaire sont agencés à l'intérieur de la paroi de pale (11) sur une ligne qui est perpendiculaire à un axe médian de la paroi de pale (11).

9. Eolienne selon la revendication 7, dans laquelle les boulons longitudinaux (16a, 16b, 20a, 20b) de différentes rangées de forme annulaire sont disposés en quinconce dans le sens de l'épaisseur (22) de la paroi de pale (11).

10. Eolienne selon la revendication 1, dans laquelle la distance entre les boulons longitudinaux (16a, 16b, 20a, 20b) disposés à l'intérieur de la paroi de pale (11) dans le sens de l'épaisseur (22) équivaut à entre 20 % et 90 % de l'épaisseur de la paroi de pale (11) à son extrémité d'emplanture.
